**Europäisches Patentamt**

**European Patent Office**

**Office européen des brevets**

(11) Veröffentlichungsnummer: **0 004 035**
**B1**

(12) # EUROPÄISCHE PATENTSCHRIFT

(45) Veröffentlichungstag der Patentschrift:
24.03.82

(51) Int. Cl.³: **B 23 K 3/02**, G 05 D 23/20

(21) Anmeldenummer: **79100607.5**

(22) Anmeldetag: **01.03.79**

(54) **Lötwerkzeug mit Temperaturregelung.**

(30) Priorität: **02.03.78 DE 2809089**

(43) Veröffentlichungstag der Anmeldung:
**19.09.79 Patentblatt 79/19**

(45) Bekanntmachung des Hinweises auf die Patenterteilung:
**24.03.82 Patentblatt 82/12**

(84) Benannte Vertragsstaaten:
**BE FR GB IT LU NL**

(56) Entgegenhaltungen:
**DE-A-2 009 827**
**DE-A-2 150 585**
**DE-A-2 263 018**
**DE-A-2 361 827**
**FR-A-2 249 424**
**US-A-4 055 744**
**US-A-3 702 418**

(73) Patentinhaber: **Cooper Industries Inc., Two Houston Center, Houston Texas 77002 (US)**

(72) Erfinder: **Kruttschnitt, Friedrich, Binswanger Strasse 47, D-7107 Neckarsulm (DE)**
Erfinder: **Rittmann, Günter, Eberhardstrasse 8, D-7121 Loechgau (DE)**

(74) Vertreter: **Wallach, Curt, Dipl.-Ing. et al, Kaufingerstrasse 8, D-8000 München 2 (DE)**

ACTORUM AG.

Lötwerkzeug mit Temperaturregelung

Die Erfindung bezient sich auf ein Lötwerkzeug mit Temperaturregelung, dessen Heizelement mit Wechselstrom über ein elektronisches Schaltglied gespeist ist, das in Abhängigkeit von dem Ausgangssignal eines ersten an dem Heizelement angeordneten Temperaturfühlers über eine Steuerschaltung ein- und ausgeschaltet wird, und das Schutzeinrichtungen zum Schutz gegen eine thermische und/oder elektrische Überlastung der zu lötenden Werkstücke aufweist, wobei die Steuerschaltung einen Vergleicher zum Vergleich des Ausgangssignals des Temperaturfühlers mit einem Sollwertsignal einschliesst, und wobei ein zweiter Temperaturfühler in räumlicher Nähe zu dem ersten Temperaturfühler angeordnet ist.

Bei einem bekannten Lötwerkzeug dieser (US-A 4 055 744) wird das Ausgangssignal des zweiten Temperaturfühlers in einer Temperaturanzeigeeinrichtung verwendet, die die jeweilige Temperatur der Lötspitze mit sehr grosser Genauigkeit anzeigt. Eine Abschaltung des Heizelementes bei Überschreiten einer vorgegebenen Temperatur ist jedoch nicht vorgesehen.

Es ist weiterhin ein Lötwerkzeug bekannt DE-A 2 263 018), bei dem der Temperaturfühler als temperaturabhängiger Widerstand ausgebildet und in eine Brückenschaltung eingeschaltet ist, die einen weiteren einstellbaren Widerstand aufweist, der einen Brückenabgleich bei einer einer vorgegebenen Temperatur entsprechenden Wi- derstandswert des temperaturabhändigen Wider- standes hervorruft. Unterhalb dieses Tempera- turwertes bzw. Widerstandswertes wird das elektronische Schaltglied geschlossen, um das Heizelement zu speisen. Zum Schutz gegen eine zu hohe Temperatur des Heizelementes bei einer Unterbrechung einer Zuführungsleitung zum Temperaturfühler ist eine Schutzschaltung vorgesehen, die ein Abschalten des Schaltgliedes bei Feststellung dieser Unterbrechung bewirkt. Ein Fehler in dem elektronischen Schaltglied selbst oder der Steuereinrichtung kann dennoch zu einer unzulässigen Erhöhung der Temperatur führen und weiterhin besteht die Gefahr des Auftretens von Spannungsspitzen an den metallischen Teilen des Lötwerkzeugs, insbesondere der Lötspitze aufgrund der direkten Kopplung der Steuerschaltung mit dem Schaltglied in Form eines Triac. Eine weitere Schwierigkeit besteht in der Trägheit der durch das Heizelement zu erhitzenden Teile, was zu einem Überschwingen der Temperatur über einen gewünschten Wert führt.

Es ist schliesslich eine Temperaturregelungseinrichtung für Heizvorrichtungen bekannt (FR-A 2 249 424), bei der ein Heizelement über zwei in Reihe geschaltete Thermostaten gespeist ist. Der zweite Thermostat befindet sich normalerweise im geschlossenen Schaltzustand, während der erste Thermostat die Temperaturregelung übernimmt. Bei einem Kurzschluss oder einem anderen Fehler in dem ersten Thermostaten und bei Entstehen einer Übertemperatur wird der zweite Thermostat wirksam, wobei eine Unterbrechung des Speisestroms der Heizvorrichtung erfolgt. Der zweite Thermostat kann gegebenenfalls so ausgebildet werden, dass er manuell zurückgestellt werden muss. Die Thermostaten bilden hierbei gleichzeitig einen Temperaturfühler und ein Schaltglied, wobei beide Schaltglieder vom Heizstrom des Heizelementes durchflossen werden. Da der zweite Thermostat sich normalerweise immer im geschlossenen Zustand befindet, ist weiterhin keine Kontrolle seiner Funktionsfähigkeit gegeben. Dadurch, dass die Thermostaten gleichzeitig den Temperaturfühler bilden, ist eine sehr genaue Temperatureinstellung nicht möglich.

Der Erfindung liegt die Aufgabe zugrunde, ein Lötwerkzeug der eingangs genannten Art zu schaffen, bei dem keine Gefahr einer thermischen und/oder elektrischen Überlastung der zu lötenden Werkstücke besteht.

Diese Aufgabe wird erfindungsgemäss dadurch gelöst, dass das Ausgangssignal des zweiten Temperaturfühlers zusammen mit einem zweiten, eine Grenztemperatur darstellenden Sollwertsignal den Eingängen eines Vergleichers einer zweiten Steuerschaltung zugeführt wird, deren Ausgang mit einem weiteren Schaltglied verbunden ist, das in dem Stromkreis eines Relais eingeschaltet ist, das im Arbeitszustand die Speisung des Heizelementes ermöglicht.

Durch die vollständig unabhängige Ausgestaltung von zwei Steuerschaltungen mit zugehörigen Temperaturfühlern wird eine zuverlässige Abschaltung des Heizstroms selbst dann erreicht, wenn ein Kurzschluss in dem Schaltglied im Stromkreis des Heizelementes auftreten sollte oder ein Fehler in der diesem Schaltglied zuge- ordneten Steuerschaltung oder dessen Tempera- turfühler auftritt. Weiterhin wird selbst bei einer Fehlbedienung sichergestellt, dass eine bestimmte Grenztemperatur nicht überschritten wird. Da die beiden Schaltglieder als solche nicht in Reihe geschaltet sind, ergibt sich ein unabhängiger Betrieb und das das Relais steuernde Schaltglied ist nicht den Heizstromschwankungen durch das Heizelement ausgesetzt, so dass sich eine sehr genaue Überwachung der Grenztemperatur ergibt.

Gemäss einer Ausgestaltung der Erfindung ist vorgesehen, dass in den Erregerstromkreis des Relais ein Arbeitskontakt dieses Relais eingeschaltet ist, der durch einen Tastschalter überbrückt ist, so dass beim Schalten der zweiten Steuerschaltung der Erregerstrom des Relais unterbrochen und durch Drücken des Tastschalters erneut gestartet werden muss und dass ein weiterer Arbeitskontakt dieses Relais in den Stromkreis des Heizelementes und in Serie zu diesem und dem zugehörigen Schaltglied eingeschaltet ist.

Weiterhin ist es möglich, dass ein Arbeitskontakt in eine der Wechselspannungs-Netzzuleitungen des Lötwerkzeuges eingeschaltet ist und durch einen Tastschalter überbrückt ist, so dass beim Schalten der zweiten Steuerschaltung der Erregerstrom des Relais unterbrochen wird und die Netzwechselspannungsspeisung des Lötwerkzeuges durch Drücken des Tastschalters erneut gestartet werden muss.

Auf diese Weise wird verhindert, dass ein Überschreiten der Grenztemperatur durch den Benutzer des Lötwerkzeuges nicht bemerkt wird, was der Fall sein könnte, wenn das Relais den Heizstromkreis unmittelbar nach Absinken der Temperatur unter die Grenztemperatur wieder schliessen könnte.

Gemäss einer weiteren vorteilhaften Ausgestaltung der Erfindung ist das Schaltglied als Triac ausgebildet, dessen Steuerelektrode über einen Impulstransformator mit dem Ausgang der Steuerschaltung gekoppelt ist. Hierdurch lässt sich eine weitgehende Verringerung der auf die metallischen Teile des Lötwerkzeuges angekoppelten Spannungsspitzen erreichen.

Eine weitere Sicherheit gegen das Auftreten von Übertemperaturen wird dadurch erzielt, dass ein Anschluss des Heizelementes sowie jeweils ein Anschluss der Temperaturfühler miteinander verbunden und über eine gemeinsame Verbindungsleitung mit der Steuerschaltung bzw. dem Schaltglied verbunden sind. Auf diese Weise wird beim Bruch einer Verbindungsleitung zu den Temperaturfühlern gleichzeitig der Heizstrom abgeschaltet.

Gemäss einer bevorzugten Ausgestaltung der Erfindung ist vorgesehen, dass die Lötspitze sowie der Lötspitzenträger gegenüber dem Heizelement und den Temperaturfühlern isoliert sind und über eine getrennte Zuleitung, in die die Parallelschaltung aus einem hochohmigen Widerstand und einem Kondensator eingeschaltet ist, mit einem elektrischen Anschluss für die zu lötenden Werkstücke verbunden sind. Auf diese Weise ist es möglich, etwaige Aufladungen und Spannungsspitzen an der Lötspitze auf einen sicheren Wert zu begrenzen, ohen dass die Gefahr eines Kurzschlusses von spannungsführenden Teilen einer im Betrieb befindlichen elektrischen Schaltung besteht.

Gemäss einer weiteren vorteilhaften Ausgestaltung der Erfindung wird dem Ausgangssignal des Vergleichers ein Proportionalanteil überlagert, so dass sich die Spitzentemperatur der Lötspitze und des Heizelementes etwa asymptotisch der durch den Sollwert vorgegebenen Temperatur annähert. Auf diese Weise besteht keine Gefahr eines Überschwingens der Temperatur der Lötspitze über den eingestellten Sollwert hinaus oder bis zu dem Grenztemperaturwert hin, so dass Fehlabschaltungen vermieden werden. Zur Erhöhung der Sicherheit ist es weiterhin vorteilhaft, eine Überwachungseinrichtung für den Zustand des Temperaturfühlers zumindest der zweiten Steuerschaltung vorzusehen.

Der Sollwert für die zweite Steuerschaltung kann entweder ebenso wie der Sollwert für die erste Steuerschaltung einstellbar sein oder er kann vorzugsweise in dem Lötwerkzeug durch feste Verdrahtung vorgegeben sein, so dass selbst bei Bedienungsfehlern die Grenztemperatur nicht überschritten wird.

Zur Erzielung eines schnellen Regelverhaltens bzw. einer schnellen Übertragung der Temperatur der Heizspitze auf das gesamte Regelsystem einschliesslich der Zurückführung der Heizleistung und der damit erzielten Temperaturerhöhung der Lötspitze ist vorgesehen, dass das Heizelement rohrförmig ausgebildet ist und am vorderen Ende in seinem Inneren ein Ende der Lötspitze umgibt und dass die Lötspitze eine Vertiefung zur Aufnahme eines die Temperaturfühler tragenden Teils aufweist. Hierdurch wird eine sehr geringe Trägheit des Regelsystems und ein sicherer Schutz gegen Überspannungen erzielt.

Um eine mechanische Beschädigung der Temperaturfühler soweit wie möglich zu verhindern, ist gemäss einer weiteren vorteilhaften Ausgestaltung der Erfindung vorgesehen, dass das die Temperaturfühler tragende Teil rohrförmig mit einer konischen Spitze ausgebildet ist und durch ein weiteres rohrförmiges Teil nach hinten hin verlängert ist, in dem die Anschlüsse der Wärmefühler geführt sind, und dass die rohrförmigen Teile mit Hilfe einer Feder in die Vertiefung der Lötspitze vorgespannt sind.

Hierbei ist gemäss einer vorteilhaften Ausgestaltung der Erfindung vorgesehen, dass die Temperaturfühler mit Hilfe einer Keramikmasse im Bereich der konischen Spitze des rohrförmigen Teils eingebettet sind.

Die Erfindung wird im folgenden anhand eines in der Zeichnung dargestellten Ausführungsbeispiels noch näher erläutert.

In der Zeichnung zeigen:

Fig. 1 ein schematisches Blockschaltbild einer Ausführungsform des Lötwerkzeuges,

Fig. 2 ein ausführlicheres Blockschaltbild des Lötwerkzeuges nach Fig. 1,

Fig. 2a ein der Fig. 2 ähnliches Blockschaltbild einer abgeänderten Ausführungsform des Lötwerkzeuges nach Fig. 1,

Fig. 3 eine weggebrochen dargestellte Längsschnittansicht einer Ausführungsform des vorderen Endes des Lötkolbens des Lötwerkzeuges,

Fig. 4 eine Ausführungsform der Temperaturfühler.

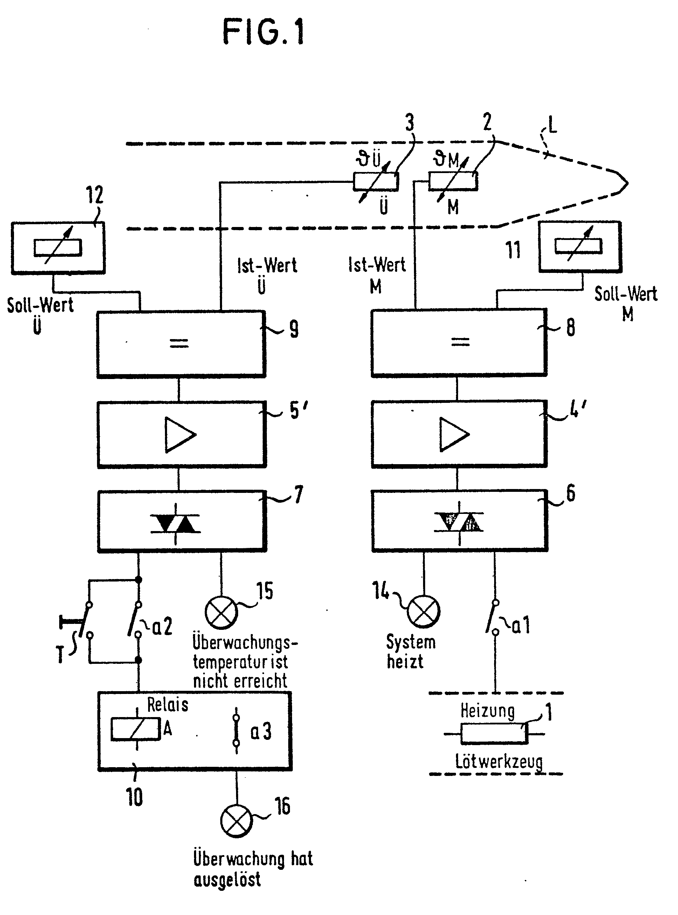

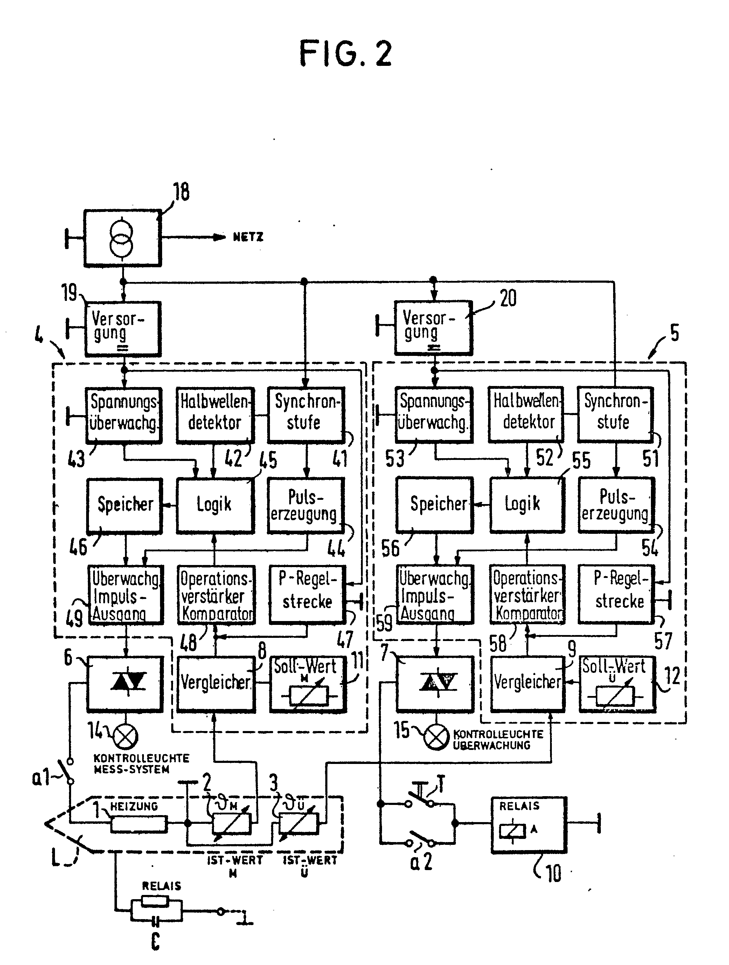

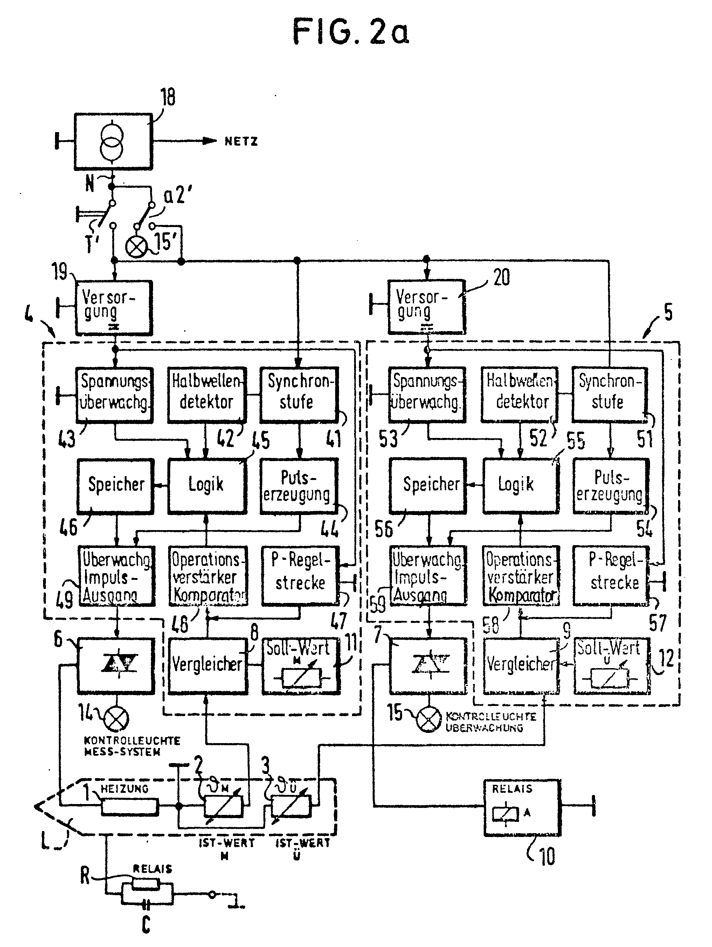

Die in Fig. 1 dargestellte Ausführungsform des Lötwerkzeuges weist einen Lötkolben L auf, bei dem in der Nähe seiner Spitze zwei Temperaturfühler 2 und 3 angeordnet sind, die beispielsweise durch NTC-Widerstände gebildet sind. Die Ausgangssignale dieser beiden Temperaturfühler 2, 3 werden Vergleichern 8, 9 zugeführt, denen weiterhin jeweils von einem Sollwert-Einsteller 11, 12 ein Sollwert zugeführt wird, der einer bestimmten Temperatur entspricht. Der Ausgang der Vergleicher 8, 9 wird einer anhand der Fig. 2 noch näher zu erläuternden Steuerschaltung 4' bzw. 5' zugeführt, deren Ausgangssignal Schaltgliedern 6, 7 zugeführt wird, die die Speisung des Heizelementes 1 des Lötkolbens L bzw. das Schalten eines Relais 10 steuern.

Das von dem Sollwert-Einsteller 12 abgegebene Signal stellt eine höhere Temperatur dar als das von dem Sollwert-Einsteller 11 abgegebene Signal, wobei das vom Sollwert-Einsteller 12 abgegebene Signal eine Grenztemperatur darstellt, die in keinem Fall überschritten werden darf.

Solange das von dem Temperaturfühler 2 abgegebene Signal kleiner als das von dem Sollwert-Einsteller 11 abgegebene Signal ist, d.h. solange die Temperatur der Lötspitze kleiner ist als die am Sollwert-Einsteller 11 eingestellte Temperatur, ist das Schaltglied 6 durchgeschaltet und das Heizelement 1 wird mit Wechselstrom gespeist. Dieser Betriebszustand wird durch Aufleuchten der Kontrollampe 14 angezeigt. Weiterhin wird, solange das von dem Temperaturfühler 3 gelieferte Signal kleiner als das von dem Sollwert-Einsteller 12 gelieferte Signal ist, das Schaltglied 7 durchgeschaltet, so dass nach Drücken des Tastschalters T das Relais 10 erregt wird, wodurch die Arbeitskontakte a1 und a2 geschlossen werden und der Ruhekontakt a3 geöffnet wird. Durch die Parallelschaltung des Tastschalters T mit dem Arbeitskontakt a2 ergibt sich eine Selbsthalteschaltung, die das Relais im erregten Zustand hält. Wenn das vom Temperaturfühler 3 abgegebene Signal grösser wird als das Ausgangssignal des Sollwert-Einstellers 12, so wird das Schaltglied 7 gesperrt und das Relais 10 fällt ab, so dass die Speisung des Heizelementes aufgrund des Öffnens des Arbeitskontaktes a1 unterbrochen wird. Gleichzeitig wird der Ruhekontakt a3 geschlossen und die Kontrollampe 16 leuchtet auf, während die an den Ausgang des Schaltgliedes 7 angeschaltete Kontrollampe 15 erlischt.

Hierdurch wird eine Anzeige dafür erreicht, dass die am Sollwert-Einsteller 12 eingestellte Grenztemperatur aus irgendwelchen Gründen überschritten wurde und das Heizelement kann erst nach einer ausreichenden Abkühlung und erneutem Drücken des Tastschalters T wieder mit Wechselstrom gespeist werden. Überschreitet die Temperatur der Lötspitze dann erneut den durch den Sollwert-Einsteller 12 vorgegebenen Wert, so löst die Überwachung erneut aus.

Der durch die Bauteile 2, 4', 6, 8, 11 gebildete Regelkreis des Heizelementes hält unter normalen Betriebsbedingungen die Temperatur des Heizelementes und damit der Lötspitze auf einem durch den Sollwert-Einsteller 11 vorgegebenen Temperaturwert, da bei Überschreiten der am Sollwert-Einsteller 11 eingestellten Temperatur eine Sperrung des Schaltgliedes 6 erfolgt, bis die Temperatur der Lötspitze ausreichend weit unter die eingestellte Temperatur abgesunken ist.

In Fig. 2 ist ein ausführlicheres Blockschaltbild des Lötwerkzeuges dargestellt.

Das gesamte Lötwerkzeug wird beispielsweise über einen Transformator 18 aus dem Wechselstromnetz gespeist, wobei der Transformator 18 seinerseits zwei Gleichspannungsversorgungen 19, 20 speist und zur Zuführung eines Synchronisiersignals an Synchronisierstufen 41 bzw. 51 der Steuerschaltungen 4 bzw. 5 dient, die den Steuerschaltungen 4' bzw. 5' nach Fig. 1 entsprechen, jedoch die Vergleicher 8 und 9 sowie die Sollwert-Einsteller 11 bzw. 12 einschliessen.

Das Ausgangssignal der Gleichspannungsversorgungen 19, 20 wird weiterhin einer Spannungsüberwachung 43 bzw. 53 zugeführt, die ein Abschalten der Schaltglieder 6 bzw. 7 bewirkt, wenn die Ausgangsspannung der Gleichspannungsversorgungen 19 bzw. 20 unter einen für einen ordnungsgemässen Betrieb der Steuerschaltungen 4 bzw. 5 ausreichenden Wert absinkt.

Da die Steuerschaltungen 4 und 5 identisch aufgebaut sind, ist es im folgenden ausreichend, lediglich die Steuerschaltung 4 zu beschreiben. Entsprechende Bauteile der Steuerschaltung 5 sind, verglichen mit den Bauteilen der Steuerschaltungen 4 mit einer um die Zahl 10 erhöhten Bezugsziffer versehen.

Die Synchronstufe 41 steuert einerseits die Pulserzeugungsstufe 44, die über die Überwachungs- und Impulsausgangsstufe 49 das Schaltglied 6 ansteuert, sowie anderseits einen Halbwellendetektor 42, der zusammen mit der Spannungsüberwachung 43 Ausgangssignale an eine Schaltlogik 45 abgibt. Die Synchronstufe ermöglicht die Erzeugung von Steuerimpulsen für das Schaltglied lediglich beim Nulldurchgang der Betriebswechselspannung, so dass die Gefahr von Störspitzen an dem Lötkolben L verringert wird.

Das Ausgangssignal des Temperaturfühlers 2 wird zusammen mit dem Ausgangssignal eines Sollwert-Einstellers 11 einem Vergleicher zugeführt, dessen Ausgangssignal einen Operationsverstärker und Komparator 4 steuert, wobei in dieser Stufe 48 dem Ausgangssignal des Vergleichers 8 noch ein Proportionalanteil aus einer P-Regelstrecke 47 überlagert wird, damit eine asymptotische Annäherung der Temperatur der Lötspitze an die durch den Sollwert-Einsteller 11 vorgegebene Temperatur erreicht wird und keine Gefahr eines Überschwingens dieser Temperatur über die gewünschte Temperatur besteht.

Der Ausgang des Operationsverstärkers und Komparators 48 wird als weiteres Eingangssignal der Logikstufe 45 zugeführt, die einen Speicher 46 steuert, der seinerseits einen weiteren Eingang an die Überwachungs- und Impulsausgangsstufe 49 abgibt. Die Logikstufe 45 sowie der Speicher 46 bilden zusammen eine Vollwellensteuerung, die die Ausgangsinformationen der Synchronisierstufe 41, der Spannungsüberwachung 43 und des Operationsverstärkers und Komparators 48 derart verarbeitet, dass immer nur eine gerade Anzahl aufeinanderfolgender Ausgangsimpulse abgegeben werden kann. Auf diese Weise treten keine Gleichstromkomponenten in dem Lastkreis auf, so dass die Gefahr von Störungen weiter verringert wird.

Die Impulsüberwachungs- und Impulsausgangsstufe 49 steuert, wie bereits angegeben, das Schaltglied 6, das beispielsweise als Triac ausgebildet ist und die Zuführung des Wechselstroms an das Heizelement 1 steuert. Gleichzeitig mit der Ansteuerung des Heizelementes 1 wird die Kontrolleuchte 14 eingeschaltet, so dass eine optische Überwachung der Betriebsweise der Steuerschaltung möglich ist.

Die Steuerschaltung 5, die mit dem Temperaturfühler 3 zusammenwirkt, kann identisch zur Steuerschaltung 4 ausgebildet sein und speist ein Schaltglied 7, das über einen Tastschalter T und einen dazu parallel geschalteten Relaiskontakt a2 ein Relais 10 ansteuert. Dieses Relais 10 weist einen weiteren Arbeitskontakt a1 auf, der in Serie in den Stromkreis des Heizelementes 1 eingeschaltet ist.

Die Betriebsweise der anhand der Fig. 2 beschriebenen Ausführungsform des Lötwerkzeuges ist folgende:

Nach Anlegen der Netzspannung an den Transformator 18 geben die Temperaturfühler Steuersignale an die Vergleicher 8, 9 ab und wenn diese Ausgangssignale unterhalb des Wertes des Ausgangssignals der Sollwert-Einsteller 11, 12 liegen, werden die Schaltglieder 7 impulsförmig durchgeschaltet, so dass eine Ausgangsspannung an den Ausgängen der Schaltglieder 6 und 7 zur Verfügung steht. Diese Ausgangsspannung kann jedoch weder an das Heizelement 1 noch an das Relais 10 gelangen, da die Relaiskontakte a1 und a2 Arbeitskontakte sind. Durch Drücken des Tastschalters T wird jedoch die Ausgangsspannung des Schaltgliedes 7 an das Relais 10 weitergeleitet, so dass dieses anzieht und die Kontakte a1 und a2 schliesst. Auch nach Loslassen des Tastschalters T verbleibt das Relais 10 im erregten Zustand, weil der Arbeitskontakt a2 geschlossen ist. Durch die Speisung des Heizelementes 1 nimmt dieses und damit die Lötspitze und die Temperaturfühler 2, 3 eine steigende Temperatur an, bis das Ausgangssignal des Temperaturfühlers 2 gleich dem Ausgangssignal des Sollwert-Einstellers 11 wird. Bei Annäherung an die durch den Sollwert-Einsteller 11 eingestellte Temperatur wird die dem Heizelement 1 über das Schaltglied 6 zugeführte Leistung derart verringert, dass sich eine periodische Annäherung der Temperatur der Lötspitze an die Solltemperatur ergibt.

Bei Erreichen der eingestellten Solltemperatur wird die Zuführung der Heizleistung an das Heizelement 1 unterbrochen, bis das Heizelement 1 geringfügig abgekühlt wird, worauf die Heizung erneut eingeschaltet wird.

Der Sollwert-Einsteller 12 der Steuerschaltung 5 ist auf einen über dem Wert des Sollwert-Einstellers 11 liegenden Temperaturwert eingestellt, so dass die Steuerschaltung 5 unter normalen Betriebsbedingungen keine Abschaltung des Heizelementes bewirkt. Der Sollwert-Einsteller kann ebenso wie der Sollwert-Einsteller 11 in Form eines Potentiometers ausgebildet sein oder es kann eine feste Verdrahtung des Sollwert-Einstellers 12 auf eine bestimmte Grenztemperatur vorgenommen werden, die in keinem Falle überschritten werden darf, selbst wenn Fehler in der Steuerschaltung 4 auftreten oder durch einen Bedienungsfehler der Sollwert-Einsteller 11 auf einen zu hohen Temperaturwert eingestellt wird. Wenn die durch den Sollwert-Einsteller 12 vorgegebene obere Grenztemperatur überschritten wird, wird das Schaltglied 7 gesperrt, so dass das Relais 10 abfällt und damit den Heizstromkreis für das Heizelement 1 über den Relaiskontakt 1a unterbricht. Gleichzeitig öffnet sich der Relaiskontakt a2 im Stromkreis der Relais-Erregerwicklung, so dass selbst bei Abkühlen der Lötspitze auf eine Temperatur unterhalb der durch den Sollwert-Einsteller 12 vorgegebenen Grenztemperatur kein selbsttätiges Wiedereinschalten der Heizung des Heizelementes 1 erfolgt. Das Heizelement 1 erhält erst nach erneutem Drücken des Tastschalters T Heizstrom.

Um zu verhindern, dass ein nicht feststellbarer Fehler in dem Temperaturfühler 3 der durch die Steuerschaltung 5 gebildeten Überwachungsschaltung auftritt, ist vorzugsweise dieser Temperaturfühler auf Kurzschluss und/oder Unterbrechung überwacht, was durch eine entsprechende Gestaltung der Steuerschaltung 5 erfolgen kann.

Weiterhin sind erste Anschlüsse des Heizelementes und der Temperaturfühler 2, 3 miteinander verbunden und über eine gemeinsame Verbindungsleitung an die Steuerschaltungen 4, 5 bzw. die Schaltglieder 6, 7 angeschlossen, so dass bei einer Unterbrechung dieser Verbindungsleitung gleichzeitig die Zuführung von Heizstrom an das Heizelement 1 unterbrochen wird.

In Fig. 2a ist eine abgeänderte Ausführungsform der in Fig. 2 gezeigten Blockschaltung gezeigt. Die Ausführungsform nach Fig. 2a unterscheidet sich von der Schaltung nach Fig. 2 dadurch, dass das Relais 10 direkt mit dem Ausgang des Schaltgliedes 7 verbunden ist und dass auch das Heizelement 1 unmittelbar mit dem Ausgang des Schaltgliedes 6 verbunden ist. Das Relais 10 weist einen Umschaltkontakt a2' auf, der in die Netzspannungszuleitung N eingeschaltet ist, wobei der Arbeitskontakt dieses Umschaltkontaktes durch einen Tastschalter T' überbrückt ist. Der Ruhekontakt dieses Umschaltkontaktes a2' ist mit einer Kontrolleuchte 15' verbunden, die im Ruhezustand des Relais 10 aufleuchtet. Zum Starten des Lötwerkzeuges muss der Tastschalter T' gedrückt werden, wodurch das Lötwerkzeug mit Betriebsleistung versorgt wird und das Relais 10 anzieht. Die Speisung des Lötwerkzeuges kann dann über den Arbeitskontakt des Umschaltkontaktes a2' erfolgen, solange die Grenztemperatur nicht erreicht ist. Bei Überschreiten der Grenztemperatur fällt das Relais 10 ab, wodurch der Arbeitskontakt des Umschaltkontaktes a2' geöffnet wird und das gesamte Lötwerkzeug stromlos wird. Ein erneutes Inbetriebsetzen ist erst durch Drücken des Tastschalters T' nach Absinken der Temperatur der Lötspitze unter die Grenztemperatur möglich.

Die Lötspitze sowie die metallischen Teile des Lötkolbens L sind gegenüber dem Heizelement und den Temperaturfühlern isoliert und zur Ableitung von Aufladungen und/oder Spannungsspitzen an der Lötspitze und den metallischen Teilen des Lötkolbens ist eine zusätzliche Rückleitung vorgesehen, in die die Parallelschaltung eines Widerstandes R und eines Kondensators C eingefügt ist.

Das freie Ende dieser Rückleitung kann beispielsweise beim Löten empfindlicher elektronischer Bauelemente mit einem Masseanschluss dieser Bauelemente verbunden werden, so dass es möglich ist, ohne Gefahr für diese Bauelemente selbst während deren Betrieb Lötungen vorzunehmen, da einerseits der Widerstand R hochohmig genug ist, um keinen Kurzschluss spannungsführender Teile gegen Masse hervorzurufen, andererseits jedoch Spannungsspitzen und Aufladungen an der Lötspitze auf einen ungefährlichen Wert begrenzt werden.

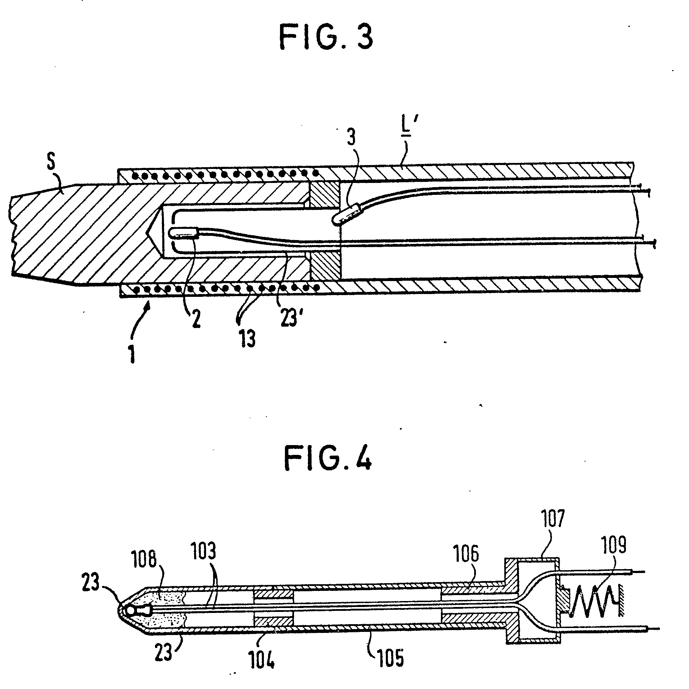

Abschliessend wird anhand der Fig. 3 noch eine Ausführungsform des Lötkolbens und der Lötspitze näher erläutert.

Die schematische Darstellung der Fig. 3 zeigt eine Lötspitze S, die am vorderen Ende eines rohrförmigen Lötkolbenkörpers L' angeordnet ist. Dieser Lötkolbenkörper L' trägt an seinem vorderen Ende das Heizelement 1, das Heizwicklungen 13 aufweist. In einem Hohlraum der Lötspitze sind die beiden Temperaturfühler 2, 3 angeordnet, die räumlich so nah wie möglich aneinander angeordnet sind, damit sich keine Temperaturunterschiede zwischen diesen Temperaturfühlern ergeben. Diese Temperaturfühler sind vorzugsweise NTC-Widerstände, und es ist vorzugsweise möglich, diese Widerstände als Doppelwiderstände unmittelbar nebeneinander auszubilden.

In Fig. 4 ist eine Ausführungsform der Temperaturfühler 2, 3 gezeigt, die in einem rohrförmigen Teil 23 mit einer konischen Spitze eingebettet sind. Die Temperaturfühler sind so nah wie möglich an der Spitze des konischen Endes des Teils 23 angeordnet, um eine möglichst schnelle Wärmeübertragung von der Lötspitze zu den Temperaturfühlern zu ermöglichen. Die Temperaturfühler 2, 3 sind in der Spitze des rohrförmigen Teils 23 mit Hilfe einer gut wärmeleitenden Keramikmasse 108 eingebettet und die Anschlussdrähte 103 der Wärmefühler erstrecken sich nach hinten durch eine Rückzugbüchse 104 und durch ein weiteres rohrförmiges Teil 105, das über die Rückzugbüchse mit dem vorderen rohrförmigen Teil 23 verschweisst oder auf andere Weise verbunden ist. In das freie Ende des rohrförmigen Teils 105 ist ein Ansatz 106 eines aus wärmebeständigem Material bestehenden Kontaktträgers 107 eingeschoben, über den die Anschlussdrähte der Wärmefühler herausgeführt sind. In Fig. 4 sind hierbei lediglich einer der Wärmefühler und dessen zwei Anschlussdrähte erkennbar, während der andere Wärmefühler mit den zugehörigen Anschlussdrähten verdeckt ist. Auf den Kontaktträger wirkt eine Feder 109 ein, der das vordere rohrförmige Teil 23 und damit die Wärmefühler in eine Vertiefung im hinteren Ende der Lötspitze S drückt, so dass ein guter Wärmekontakt zwischen der Lötspitze S und den Wärmefühlern erreicht ist. Die Vertiefung in der Lötspitze kann ähnlich der in Fig. 3 gezeigten Vertiefung ausgebildet sein oder es kann eine wesentliche kürzere der konischen Form der Spitze des rohrförmigen Teils 23 entsprechende Vertiefung vorgesehen sein.

**Patentansprüche**

1. Lötwerkzeug mit Temperaturregelung, dessen Heizelement (1) mit Wechselstrom über ein elektronisches Schaltglied (6) gespeist ist, das in Abhängigkeit von dem Ausgangssignal eines ersten an dem Heizelement (1) angeordneten Temperaturfühlers (2) über eine Steuerschaltung (4) ein- und ausgeschaltet wird, und das Schutzeinrichtungen zum Schutz gegen eine thermische und/oder elektrische Überlastung der zu lötenden Werkstücke aufweist, wobei die Steuerschaltung (4) einen Vergleicher (8) zum Vergleich des Ausgangssignals des Temperaturfühlers (2) mit einem Sollwertsignal (11) einschliesst, und wobei ein zweiter Temperaturfühler (3) in räumlicher Nähe zu dem ersten Temperaturfühler (2) angeordnet ist, dadurch gekennzeichnet, dass das Ausgangssignal des zweiten Temperaturfühlers (3) zusammen mit einem zweiten, eine Grenztemperatur darstellenden Sollwertsignal (12) den Eingängen eines Vergleichers (9) einer zweiten Steuerschaltung (5) zugeführt wird, deren Ausgang mit einem weiteren Schaltglied (7) verbunden ist, das in dem Stromkreis eines Relais (10) eingeschaltet ist, das im Arbeitszustand die Speisung des Heizelementes (1) ermöglicht.

2. Lötwerkzeug nach Anspruch 1, dadurch gekennzeichnet, dass in den Erregerstromkreis des Relais (10) ein Arbeitskontakt (a2) dieses Relais eingeschaltet ist, der durch einen Tastschalter (T) überbrückt ist, so dass beim Schalten der zweiten Steuerschaltung (5) der Erregerstrom des Relais (10) unterbrochen und durch Drücken des Tastschalters (T) erneut gestartet werden muss, und dass ein weiterer Arbeitskontakt (a1) dieses Relais (10) in den Stromkreis des Heizelementes (1) und in Serie zu diesem und dem zugehörigen Schaltglied (6) eingeschaltet ist.

3. Lötwerkzeug nach Anspruch 1, dadurch gekennzeichnet, dass ein Arbeitskontakt (a2') in eine der Wechselspannungs-Netzzuleitungen des Lötwerkzeuges eingeschaltet ist und durch einen Tastschalter (T') überbrückt ist, so dass beim Schalten der zweiten Steuerschaltung (5) der Erregerstrom des Relais (10) unterbrochen wird und die Netzwechselspannungsspeisung des Lötwerkzeuges durch Drücken des Tastschalters (T') erneut gestartet werden muss.

4. Lötwerkzeug nach einem der Ansprüche 1 bis 3, dadurch gekennzeichnet, dass das Schaltglied (6, 7) als Triac ausgebildet ist, dessen Steuerelektrode über einen Impulstransformator mit dem Ausgang der Steuerschaltung (4, 5) gekoppelt ist.

5. Lötwerkzeug nach einem der vorhergehenden Ansprüche, dadurch gekennzeichnet, dass ein Anschluss des Heizelementes (1) sowie jeweils ein Anschluss der Temperaturfühler (2, 3) miteinander verbunden und über eine gemeinsame Verbindungsleitung mit der Steuerschaltung (4, 5) bzw. dem Schaltglied (6) verbunden sind.

6. Lötwerkzeug nach einem der vorhergehenden Ansprüche, dadurch gekennzeichnet, dass die Lötspitze (S) sowie der Lötspitzenträger gegenüber dem Heizelement (1) und den Temperaturfühlern isoliert sind und über eine getrennte Zuleitung, in die die Parallelschaltung aus einem hochohmigen Widerstand und einem Kondensator eingeschaltet ist, mit einem elektrischen Anschluss für die zu lötenden Werkstücke verbunden sind.

7. Lötwerkzeug nach einem der vorhergehenden Ansprüche, dadurch gekennzeichnet, dass dem Ausgangssignal des Vergleichers (8) ein P-Anteil überlagert wird, so dass sich die Spitzentemperatur der Lötspitze (S) und des Heizelementes etwa asymtotisch der durch den Sollwert vorgegebenen Temperatur annähert.

8. Lötwerkzeug nach einem der vorhergehenden Ansprüche, dadurch gekennzeichnet, dass eine Überwachungseinrichtung für den Zustand des Temperaturfühlers (3) der zweiten Steuerschaltung vorgesehen ist.

9. Lötwerkzeug nach einem der vorhergehenden Ansprüche, dadurch gekennzeichnet, dass das Sollwertsignal für die erste Steuerschaltung über ein Potentiometer kontinuierlich einstellbar ist und dass der Sollwert für die zweite Steuerschaltung ebenfalls über ein Potentiometer oder durch eine feste Schaltung einstellbar bzw. vorgegeben ist.

10. Lötwerkzeug nach einem der vorhergehenden Ansprüche, dadurch gekennzeichnet, dass das Heizelement (1) rohrförmig ausgebildet ist und am vorderen Ende in seinem Inneren ein Ende der Lötspitze (S) umgibt und dass die Lötspitze (S) eine Vertiefung zur Aufnahme eines die Temperaturfühler (2, 3) tragenden Teils (23) aufweist.

11. Lötwerkzeug nach Anspruch 10, dadurch gekennzeichnet, dass das die Temperaturfühler (2, 3) tragende Teil (23) rohrförmig mit einer konischen Spitze ausgebildet ist und durch ein weiteres rohrförmiges Teil (105) nach hinten hin verlängert ist, in dem die Anschlüsse der Wärmefühler (2, 3) geführt sind, und dass die rohrförmigen Teile (23, 105) mit Hilfe einer Feder in die Vertiefung der Lötspitze (S) vorgespannt sind.

12. Lötwerkzeug nach Anspruch 11, dadurch gekennzeichnet, dass die Temperaturfühler (2, 3) mit Hilfe einer Keramikmasse (108) im Bereich der konischen Spitze des rohrförmigen Teils (23) eingebettet sind.

**Claims**

1. A soldering tool with temperature regulation wherein the heating element (1) of the soldering tool is fed with a.c. current via an electronic switch device (6) which is switched on and off via a control circuit (4) in dependence on the output signal of a first temperature sensor (2) arranged on the heating element (1) and which has protection devices for protection against a thermal and/or electrical overload of the workpieces to be soldered, wherein the control circuit (4) includes a comparator (8) for comparing the output signal of the temperature sensor (2) with a desired value signal (11) and wherein a second temperature sensor (3) is arranged in the spatial vicinity of the first temperature sensor (2), characterized in that, the output signal of the second temperature sensor (3) is passed together with a second desired value signal (12) representing a limiting temperature to the inputs of a comparator (9) of a second control circuit (5) the output of which is connected to a further switch device (7) inserted in the energizing circuit of a relay (10) which, in the made operating condition, permits the energization of the heating element.

2. A soldering tool in accordance with claim 1, characterized in that, a make contact (a2) of the relay (10) is inserted in the energizing circuit of this relay, the contact being bridged by a push button switch (T) so that on switching of the second control circuit (5) the excitation current of the relay (10) is interrupted and must be restarted by pushing the push button switch (T) and in that a further make contact (1) of this relay (10) is inserted in the circuit of the heating element (1) in series with the heating element and associated switch device (6).

3. A soldering tool in accordance with claim 1, characterized in that, a make contact (a2') ist inserted into one of the a.c. supply lines of the soldering tool and is bridged by a push button switch (T') so that on switching of the second control circuit (5) the excitation current of the relay (10) ist interrupted and the a.c. voltage supply for the soldering tool must be restarted by pushing the push button switch (T').

4. A soldering tool in accordance with one of the claims 1 to 3, characterized in that, the switch device (6, 7) is constructed as a triac the control electrode of which is coupled with the output of the control circuit (4, 5) via a pulse transformer.

5. A soldering tool in accordance with one of the preceding claims, characterized in that, one connection of the heating element (1) and also one connection of each of the temperature sensors (2, 3) are connected together and are connected with the control circuit (4, 5) or the switch device (6) via a common connection line.

6. A soldering tool in accordance with one of the preceding claims, characterized in that, the soldering tip (S) and also the carrier for the soldering tip are insulated with respect to the heating element (1) and the temperature sensors and are connected via a separate supply line, in which the parallel circuit of a high ohmic resistor and a capacitor is inserted, with an electrical connection for the workpieces which are to be soldered.

7. A soldering tool in accordance with one of the preceding claims, characterized in that, a P component is superimposed on the output signal of the comparator (8) so that the peak temperature of the soldering tip (S) and of the heating element approaches the predetermined temperature given by the desired value approximately asymtotically.

8. A soldering tool in accordance with one of the preceding claims, characterized in that, a monitoring device is provided for the condition of the temperature sensor (3) of the second control circuit.

9. A soldering tool in accordance with one of the preceding claims, characterized in that, the desired value signal for the first control circuit is continuously adjustable via a potentiometer and in that the desired value for the second control circuit is likewise adjustable via a potentiometer, or predetermined by a fixed circuit.

10. A soldering tool in accordance with one of the preceding claims, characterized in that, the heating element (1) is of tubular construction and surrounds, at the front end in its interior, one end of the soldering tip (S) and in that the soldering tip (S) has a recess for receiving a part (23) carrying the temperature sensors (2, 3).

11. A soldering tool in accordance with claim 10, characterized in that, the part (23) carrying the temperature sensors (2, 3) is tubular with a conical tip and is extended rearwardly by a further tubular part (105) in which the connections for the temperature sensors (2, 3) are guided and in that the tubular parts (23, 105) are biased with the aid of a spring into the recess of the soldering tip (S).

12. A soldering tool in accordance with claim 11, characterized in that, the temperature sensors (2, 3) are embedded in the vicinity of the conical tip of the tubular part (23) with the aid of a ceramic mass (108).

## Revendications

1. Outil à souder avec réglage de la température, dont l'élément chauffant (1) est alimenté en courant alternatif par l'intermédiaire d'un organe de couplage électronique (6) qui est mis en et hors circuit par un circuit de commande (4) en fonction du signal de sortie d'un premier détecteur de température (2) disposé sur l'élément chauffant et qui présente des dispositifs protecteurs pour la protection contre une surcharge thermique et/ou électrique des pièces à souder, le circuit de commande (4) comportant un comparateur (8) pour comparer le signal de sortie du détecteur de température (2) à un signal de valeur prescrite (11) et un deuxième détecteur de température (3) étant disposé au voisinage spatial du premier détecteur de température (2), caractérisé en ce que le signal de sortie du deuxième détecteur de température (3) est amené, conjointement avec un deuxième signal de valeur prescrite (12) représentant une température-limite, aux entrées d'un comparateur (9) d'un deuxième circuit de commande (5) dont la sortie est reliée à un autre organe de couplage (7) qui est introduit dans le circuit d'un relais (10) rendant possible d'alimentation de l'élément chauffant (1) à l'état de travail.

2. Outil à souder selon la revendication 1, caractérisé en ce qu'on a introduit, dans le cuircuit excitateur du relais (10), un contact de travail (a2) de ce relais, qui est ponté par un commutateur à touche (T), de sorte que le courant excitateur du relais (10) doit être interrompu lors de la connexion du deuxième circuit de commande (5) et doit être rétabli par pression sur le commutateur à touche (T); et en ce qu'un autre contact de travail (a1) de ce relais (10) est introduit dans le circuit de l'élément chauffant (1) et est en série avec celui-ci et l'organe de couplage correspondant (6).

3. Outil à souder selon la revendication 1, caractérisé en ce qu'un contact de travail (a2') est introduit dans l'une des lignes d'amenée de secteur de tension alternative de l'outil à souder et est ponté par un commutateur à touche (T'), de sorte que le courant excitateur du relais (10) est interrompu lors de la connexion du deuxième circuit de commande (5) et que l'alimentation en tension alternative de secteur de l'outil à souder doit être rétablie par une pression sur le commutateur à touche (T').

4. Outil à souder selon l'une quelconque des revendications 1 à 3, caractérisé en ce que l'organe de couplage (6, 7) est conçu comme un triac dont l'électrode de commande est couplée, par l'intermédiaire d'un transformateur d'impulsions, à la sortie du circuit de commande (4, 5).

5. Outil à souder selon l'une quelconque des revendications 1 à 4, caractérisé en ce qu'une connexion de l'élément chauffant (1), ainsi que chaque connexion des détecteurs de température (2, 3) sont reliés l'une à l'autre et sont reccordées, par l'intermédiaire d'une ligne de jonction commune, au circuit de commande (4, 5) ou à l'organe de couplage (6).

6. Outil à souder selon l'une quelconque des revendications 1 à 5, caractérisé en ce que la panne à souder (S), ainsi que le porte-panne à souder sont isolés par rapport à l'élément chauffant (1) et aux détecteurs de température et sont reliés à une connexion électrique pour les pièces à souder par l'intermédiaire d'une ligne d'amenée, séparée dans laquelle est introduit le montage en parallèle d'une résistance à résistance élevée et d'un condensateur.

7. Outil à souder selon l'une quelconque des revendications 1 à 6, caractérisé en ce qu'une composante proportionnelle est superposée au signal de sortie du comparateur (8), de façon que la température de crête de la panne à souder (S) et de l'élément chauffant se rapproche quelque peu asymptotiquement de la température prédéterminée par la valeur prescrite.

8. Outil à souder selon l'une quelconque des revendications 1 à 7, caractérisé en ce qu'on a prévu un dispositif de surveillance de l'état du détecteur de température (3) du deuxième circuit de commande.

9. Outil à souder selon l'une quelconque des revendications 1 à 8, caractérisé en ce que le signal de valeur prescrite pour le premier circuit de commande est réglable en continu par l'intermédiaire d'un potentiomètre et en ce que la valeur prescrite pour le deuxième circuit de commande est prédéterminée ou est réglable également par l'intermédiaire d'un potentiomètre ou par un circuit fixe.

10. Outil à souder selon l'une quelconque des revendications 1 à 9, caractérisé en ce que l'élément chauffant est conçu tubulairement et entoure intérieurement, à l'extrémité avant, une extrémité de la panne à souder (S) et en ce que cette panne à souder (S) présente un évidement pour la mise en place d'une partie (23) soutenant les détecteurs de température (2, 3).

11. Outil à souder selon la revendication 10, caractérisé en ce que la partie (23) soutenant les détecteurs de température (2, 3) est conçue tubulairement avec une pointe conique et est prolongée vers l'arrière par une autre partie tubulaire (105) dans laquelle sont introduites les connexions des détecteurs de température (2, 3); et en ce que les parties tubulaires (23, 105) sont précontraintes au moyen d'un ressort dans l'évidement de la panne à souder (S).

12. Outil à souder selon la revendication 11, caractérisé en ce que les détecteurs de température (2, 3) sont enrobés au moyen d'une masse céramique (108) dans la zone de la pointe conique de la partie tubulaire (23).

# FIG.1

# FIG. 2

FIG. 2a

# FIG. 3

# FIG. 4